# EUROPÄISCHE PATENTSCHRIFT

(11) **EP 1 610 099 B1**
(45) Veröffentlichungstag und Bekanntmachung des Hinweises auf die Patenterteilung: **20.02.2008**
(21) Anmeldenummer: 05103269.6
(22) Anmeldetag: 22.04.2005
(51) Int. Cl.: G01D 11/28, G02F 1/29, G02B 26/08, G02B 5/08, G01D 13/28, G01D 7/06, G07C 5/08, B60K 35/00

(54) **LED-Scannerzeiger**
LED scanning indicator
Indicateur scanner à diode lumineuse

(30) Priorität: 22.06.2004 DE 102004030156
(43) Veröffentlichungstag der Anmeldung: 28.12.2005
(73) Patentinhaber: ROBERT BOSCH GMBH, 70442 Stuttgart (DE)
(72) Erfinder: Fiess, Reinhold, 77770, Durbach (DE); Schach, Harald, 71287, Flacht (DE); Sybrichs, Ralf, 70825, Korntal-Muenchingen (DE); Herzog, Bernhard, 70619, Stuttgart (DE); Borsdorf, Uwe, 71701, Schwieberdingen (DE); Grimm, Dietmar, 71696, Moeglingen (DE)

(56) Entgegenhaltungen:
- US-A- 5 136 426
- US-A- 5 715 021
- US-A- 6 020 937
- US-A1- 2002 050 963
- US-B1- 6 351 324
- US-B1- 6 621 609

## Beschreibung

### Stand der Technik

Die vorliegende Erfindung betrifft eine Anzeigevorrichtung, insbesondere für Kombiinstrumente von Kraftfahrzeugen, mit einer mindestens eine LED (LED = Light Emitting Diode, Leuchtdiode) umfassenden Lichtquelle zur Erzeugung eines als Anzeigemittel dienenden Lichtstrahls, der über bewegliche Umlenkmittel sowie insbesondere auch über ortsfeste Umlenkmittel wahlweise auf verschiedene Bereiche einer durchleuchtbaren Anzeigefläche lenkbar ist.

Insbesondere bei Kraftfahrzeugen sind Kombiinstrumente allgemein bekannt, die mehrere derartige Anzeigevorrichtungen umfassen. Dabei werden üblicherweise analoge Zeiger-Anzeigevorrichtungen, aber zunehmend auch digitale Anzeigevorrichtungen, zur Anzeige unterschiedlicher Informationen, beispielsweise der Geschwindigkeit, der Motordrehzahl, des Tankfüllstandes, der Temperatur von Öl oder Kühlwasser oder zur Anzeige ähnlicher Betriebsparameter genutzt. Dennoch können Anzeigevorrichtungen der vorliegenden Art bei beliebigen Anwendungsgebieten, beispielsweise bei Schienen-, Luft- oder Wasserfahrzeugen, sowie bei verschiedenen Messgerätanzeigen oder Steuerständen zum Einsatz kommen.

Während analoge Anzeigevorrichtungen herkömmlicherweise mit einem mechanischen Zeiger versehen sind, der vor einer Skalenscheibe schwenkbar gelagert ist, sind auch Zeigeranzeigen bekannt, bei denen Licht zur Darstellung der anzuzeigenden Informationen eingesetzt wird.

So offenbart beispielsweise die DE 43 13 530 A1 eine Anzeigevorrichtung, bei welcher der Zeiger durch einen Lichtstrahl gebildet ist. Dabei ist die Lichtquelle in einem schwenkbar gelagerten Schirmgehäuse angeordnet, das in seiner Schirmwandung eine Öffnung aufweist, durch die ein Lichtstrahl geradlinig als Zeiger in eine den Lichtstrahl sichtbar machende Streuscheibe austreten kann.

Hierdurch ist zwar die Zeigerlänge variabel, aber andere Zeigerdimensionen sind nicht veränderbar. So können insbesondere keine punktförmigen oder bogenförmig in Umfangsrichtung verlaufenden Anzeigen dargestellt werden, was die Einsatzmöglichkeiten beschränkt. Nachteilig ist weiterhin, dass mit dieser Vorrichtung nur ein einzelner Lichtzeiger erzeugt werden kann. Zur gleichzeitigen Anzeige mehrerer Informationen mit mehreren Lichtzeigern ist daher die Kombination mehrerer Systeme mit jeweils einem schwenkbaren Schirmgehäuse erforderlich, was nicht nur einen erheblichen konstruktiven Aufwand und damit verbundene hohe Kosten, sondern insbesondere auch einen entsprechend vergrößerten Bauraumbedarf bedeutet, was insbesondere im Kraftfahrzeugbereich ein erheblicher Nachteil ist.

Aus der DE 195 29 390 A1 ist weiterhin ein Kombiinstrument bekannt, bei dem ein Zeiger durch einen schwenkbaren Laserstrahl gebildet ist, der von vorne unter einem Winkel in Auflichttechnik auf die Oberfläche der Anzeigefläche gerichtet wird. Mittels eines Strahlteilers ist der Laserstrahl dabei in zwei Teilstrahlen aufteilbar, so dass auch zwei verschiedene Werte gleichzeitig angezeigt werden können.

Jedoch sind die hiermit darstellbaren Leuchtpunkte lediglich in ihrer Position, nicht aber in ihrer Form oder Größe variierbar, so dass auch hier den Anwendungsmöglichkeiten relativ enge Grenzen gesetzt sind. Von Nachteil ist außerdem, dass diese Anzeigevorrichtung aufgrund ihrer Auflichtkonstruktion den Einsatz einer Laser-Lichtquelle erfordert, was entsprechend hohe Kosten sowie höhere Betriebstemperaturen verursacht.

Zur variablen Markierung eines Sollwertes ist aus der EP 0 785 416 B1 ferner ein analoges Zeigerinstrument bekannt, bei dem ein Lichtstrahl in einen Bereich einer bogenförmigen Anzeigefläche projiziert wird. Dabei wird ein Laserstrahl über einen beweglich gelagerten und von einem Stellmotor verschwenkbaren Spiegel in den gewünschten Anzeigebereich gelenkt. Auch diese Vorrichtung ist aufgrund des Einsatzes einer Laser-Lichtquelle mit den zuvor genannten Nachteilen verbunden.

Zur Vermeidung dieser Nachteile wird als Variante hierzu vorgeschlagen, als Lichtquelle eine LED einzusetzen. Während eine LD (LD = Laserdiode) jedoch einen eng begrenzten, fast parallelen Lichtstrahl erzeugt, der zur Projektion eng begrenzter Konturen auf der Anzeigefläche relativ einfach über Spiegel umgelenkt werden kann, erzeugen LEDs ein weit weniger exakt definiertes Strahlprofil, weshalb eine LED bei der Anzeigevorrichtung gemäß der EP 0 785 416 B1 nur in Verbindung mit einem massiven Lichtleiter verwendet werden kann, der sich von der LED bis zu dem Projektionsbereich erstreckt. Zur Markierung des gewünschten Bereichs der Anzeigefläche muss dieser mechanische Lichtleiter in die entsprechende Position bewegt werden, was gegenüber dem verschwenkbaren Spiegel deutlich größere bewegte Massen und daher einen entsprechend stärker dimensionierten Stellmotor erfordert, was wiederum zu einem vergrößerten Bauraumbedarf und zu höheren Kosten führt. Von Nachteil ist darüber hinaus, dass in beiden Fällen mit dieser Vorrichtung nur ein einziger Sollwert angezeigt werden kann, der zudem in seiner Form und Größe nicht variierbar ist.

Die US 2002/0050963 A1 zeigt eine Lichtstfahl-Anzeigeeinheit mit einer entsprechenden Scannereinheit. Verschiedene Diodenfelder werden angesteuert, wobei deren Licht über eine Projektionsordnung und einen rotierenden Polygonspiegel auf eine Anzeigefläche umgelenkt wird. Die Lichtquellen sind dabei beispielsweise als LEDs ausgeführt. Eine Aktivierung der einzelnen Strahlen erfolgt über eine zugeordnete Kontrollelektronik.

Die der vorliegenden Erfindung zugrundeliegende Problematik besteht also allgemein darin, eine verbesserte Anzeigevorrichtung der eingangs genannten Art zu schaffen, die die Darstellung von Markierungen in unterschiedlichen Formen und Größen sowie die gleichzeitige Anzeige mehrerer Markierungen und somit einen flexibleren Einsatz ermöglicht, ohne die beschriebenen Nachteile aufzuweisen.

### Vorteile der Erfindung

Die erfindungsgemäße Anzeigevorrichtung gemäß Anspruch 1 weist gegenüber den bekannten Ausführungsformen den Vorteil auf, dass mit nur einer einzigen Lichtquelle die gleichzeitige Anzeige einer Vielzahl von Markierungen bzw. Informationen möglich ist, die in Form und Größe variabel sind. Auch können blinkende und/oder sich über die Anzeigefläche bewegende Markierungen in unterschiedlichen Helligkeiten dargestellt werden. Deshalb ist die erfindungsgemäße Anzeigevorrichtung besonders vielseitig und flexibel einsetzbar. Dabei ist sie aufgrund ihrer einfachen Konstruktion kostengünstig herzustellen. Von Vorteil ist es weiterhin, dass LEDs nicht nur in einem deutlich geringeren Temperaturbereich, der uneingeschränkt für den Einsatz in Kraftfahrzeugen geeignet ist, sondern auch in einer sehr großen Vielfalt von Farben zur Verfügung stehen. Die der vorliegenden Erfindung zugrundeliegende Idee besteht darin, dass die beweglichen Umlenkmittel einen kontinuierlich rotierenden Drehkörper, insbesondere einen Drehspiegel umfassen, dass ein optisches System zur Fokussierung des Lichtstrahls auf die Anzeigefläche vorgesehen ist, und dass Steuerungsmittel vorgesehen sind, durch die die LED in intermittierend ansteuerbar ist. Vorzugsweise rotiert der Drehkörper mit hohen Geschwindigkeiten von über 3000 Umdrehungen pro Minute und wird durch die Lichtquelle mit einer entsprechend hohen Taktung angestrahlt, so dass die mit dem Lichtstrahl zu markierenden Bereiche der Anzeigefläche mit einer so hohen Frequenz beleuchtbar sind, dass das menschliche Auge die wiederholte Bewegung des Lichtstrahls nicht mehr erkennen kann und eine kontinuierlich leuchtende Anzeige wahrnimmt. Auf diese Weise können durch gezieltes hochfrequentes Ein- und Ausschalten sowie durch Veränderungen der Helligkeit der LED die beabsichtigten Informationen sowohl an der bzw. den gewünschten Position(en) der Anzeigefläche, als auch in verschiedener Form und Größe angezeigt werden. So sind beispielsweise nicht nur punktförmige Markierungen durch kurzzeitiges Einschalten der LED, sondern durch geringfügig längere Einschaltzeiten der LED insbesondere auch bogenförmige Markierungen in beliebiger Länge auf der Anzeigefläche erzeugbar.

Durch die Anordnung eines optischen Systems kann der gegenüber den fast ideal parallelen Lichtstrahlen von Laserdioden bei LEDs bestehende Nachteil eines weniger exakt definierten Strahlprofils ausgeglichen werden, wobei die Optik dabei so angeordnet sein kann, dass der Lichtstrahl unmittelbar oder mittelbar auf die Anzeigefläche fokussiert wird. Insbesondere in Kombination mit einem nicht streuenden oder nur schwach streuenden, transmissiven Anzeigebereich, der beispielsweise durch das Zifferblatt einer Anzeigevorrichtung gebildet sein kann, lassen sich so unter Ausnutzung der vorgenannten Vorteile auch bei der Verwendung von LEDs Markierungen mit akzeptabler Anmutung auf die Anzeigefläche projizieren. Die sich aus der Optik zur Umlenkung des Lichtstrahls ergebende Richtwirkung des Lichts bleibt dabei erhalten, so dass auch mit LEDs ausreichende Leuchtdichten von über 200 cd/m² erreichbar sind. Besonders gute Leuchtdichtewerte können dabei durch den Einsatz von LEDs mit engem Abstrahlwinkel erzielt werden, wie sie beispielsweise von Osram als OS Bauform LxE 65B mit integrierter Linse bekannt sind.

Erfindungsgemäß umfasst die Anzeigefläche ein transmissives Medium und hinter der Anzeigefläche ist als feststehendes Umlenkmittel ein in einer zur Rotationsachse des Drehkörpers senkrechten Umlenkebene liegender, in seinem Verlauf den markierbaren Bereichen der Anzeigefläche entsprechender Kurvenspiegel derart angeordnet, dass die von dem Drehkörper reflektierten Lichtstrahlen auf die Rückseite der Anzeigefläche umlenkbar sind. Das transmissive Medium kann dabei vorzugsweise durch eine nicht streuende oder eine nur schwach streuende Streuscheibe gebildet sein, so dass der durchgelassene Lichtstrahl weitestgehend gerichtet bleibt. Der Kurvenspiegel kann innerhalb der Umlenkebene grundsätzlich einen beliebig geformten kurvenförmigen Verlauf haben. Vorzugsweise ist er jedoch bogenförmig gekrümmt oder als vollständig geschlossener kreisförmiger Ringspiegel ausgeführt, der den kontinuierlich rotierenden Drehkörper teilweise bzw. vollständig umgibt. Dabei hat der Kurvenspiegel unabhängig von seiner Form vorzugsweise eine kontinuierlich durchgehende Spiegelfläche. Wenn jedoch nur bestimmte Bereiche einer segmentierten Anzeigefläche markiert werden sollen, reicht auch ein abschnittsweise unterbrochener Kurvenspiegel bzw. eine abschnittsweise unterbrochene Spiegelfläche aus.

Vorteilhafte Weiterbildungen und Verbesserungen der erfindungsgemäßen Anzeigevorrichtung ergeben sich aus den abhängigen Ansprüchen.

Eine besonders kleinbauende Ausführungsform der Anzeigevorrichtung kann aufgrund eines kompakter gefalteten Strahlengangs dadurch erreicht werden, dass das optische System zur Fokussierung des Lichtstrahls auf die Anzeigefläche in bewegliche Umlenkmittel und/oder in zusätzlich angeordnete ortsfeste Umlenkmittel zur Umlenkung des Lichtstrahls integriert ist. Vorzugsweise bilden einzelne oder mehrere Umlenkmittel dabei optische Hohlspiegel, wodurch außerdem auch die Abbildungseigenschaften der Vorrichtung verbessert werden. So kann beispielsweise die Spiegelfläche eines ringförmigen Kurvenspiegels als feststehendem Umlenkmittel anstelle einer kegelstumpfförmigen eine leicht konkav gewölbt ausgebildete Spiegelfläche aufweisen.

Besonders vorteilhaft ist es dabei ferner, wenn mindestens eine Umlenkfläche bzw. Spiegelfläche der beweglichen und/oder der feststehenden Umlenkmittel zur Integration des optischen Systems derart asphärisch gewölbt ist, dass der Krümmungsradius der Spiegelfläche in einer die Rotationsachse des Drehkörpers enthaltenden Ebene deutlich größer ist als der Krümmungsradius in einer senkrecht zur Rotationsachse des Drehkörpers liegenden Ebene. Mit derartigen als Off-axis-Paraboloidspiegel ausgebildeten Umlenkmitteln können die Abbildungseigenschaften, insbesondere die Schärfentiefe der Abbildung in dem Durchtrittsbereich der Anzeigefläche weiter verbessert werden. Ein ringförmiger Kurvenspiegel kann dabei vorzugsweise als Toroid-Spiegel ausgeführt sein, dessen asphärische Spiegelfläche in einer die Rotationsachse des Drehkörpers enthaltenden Schnittebene einen Radius hat, der um den Faktor 1,4 größer ist als der bei der Umlenkung wirksame Krümmungsradius in der Umlenkebene des Kurvenspiegels.

Bei der Anordnung eines kreisförmigen oder kreisabschnittsförmigen Kurvenspiegels kann die Rotationsachse des Drehkörpers auch in einer Versatzrichtung exzentrisch zum Kurvenspiegel versetzt angeordnet werden. Hierdurch ergeben sich unterschiedlich lange optische Wege für den Lichtstrahl, so dass sich die Fokussierung auf die Anzeigefläche schwieriger gestaltet.

Hierzu kann gemäß einer ersten Ausführungsform der Erfindung vorgesehen sein, dass die Umlenkebene, in der der Kurvenspiegel verläuft, zu der Ebene der Anzeigefläche um einen Winkel geneigt angeordnet ist. Die Neigung ist dabei vorzugsweise derart orientiert, dass die axiale Entfernung zwischen dem Kurvenspiegel und der Anzeigefläche an der in der Versatzrichtung liegenden Umfangsstelle des Kurvenspiegels maximal ist.

Gemäß einer alternativen Ausführungsform der Erfindung kann der Kurvenspiegel auch über seinen Verlauf variierende Wölbungen in einer die Rotationsachse des Drehkörpers enthaltenden Ebene aufweisen. Hierbei wird der Krümmungsradius in einer die Rotationsachse des Drehkörpers enthaltenden Ebene vorzugsweise mit abnehmender Entfernung zur Rotationsachse geringer. Bei einem kreisförmiger Ausbildung ist der Krümmungsradius vorteilhafterweise an der in der Versatzrichtung liegenden Umfangsstelle des Kurvenspiegels minimal.

Nach einer besonders bevorzugten Ausführungsform der Erfindung ist ferner vorgesehen, dass die Lichtquelle zwei verschiedenfarbige LEDs sowie einen dichroitischen Spiegel umfasst, durch welchen die Lichtstrahlen der zwei LEDs verlustarm einander überlagerbar sind. Hierdurch können mehrfarbige Darstellungen auf den selben oder auch auf einen radial leicht versetzten Bereich der Anzeigefläche projiziert werden, wobei nicht nur die Farben der beiden LEDs, sondern bei gleichzeitiger Ansteuerung der LEDs auch Mischfarben erzeugt werden können.

Besonders vorteilhaft ist es dabei, wenn die Lichtquelle drei verschiedenfarbige LEDs sowie zwei dichroitische Spiegel oder einen X-Cube umfasst, durch die bzw. den die Lichtstrahlen der drei LEDs einander verlustarm überlagerbar sind. Bei der Verwendung je einer roten, grünen und blauen LED kann somit durch entsprechende Ansteuerung der gesamte Farbraum typischer Farbanzeigen erzeugt werden. Wenn dabei das Helligkeitsverhältnis der LEDs innerhalb eines bestimmten Bereichs oder Segments der Anzeigefläche verändert wird, sind sogar Farbverläufe darstellbar. Sogenannte X-Cubes sind dabei insbesondere von LCD-basierten Beamern bekannt und beispielsweise in der DE 100 03 245 A1 beschrieben. Ihr Funktionsprinzip besteht wie bei dichroitischen Spiegeln darin, dass eine in Dünnschichttechnologie hergestellte Spiegelschicht eine Reflektivität hat, die stark von der Wellenlänge des Lichtes abhängt. Nicht reflektiertes Licht wird dabei nicht absorbiert, sondern durchgelassen, so dass diese Technik fast verlustfrei arbeitet.

Besonders vorteilhaft ist es ferner, wenn zur Synchronisation der Lichtquelle mit dem Drehkörper ein mit einer Vorrichtungssteuerung verbundener Fotosensor derart angeordnet ist, dass er im Strahlengang eines vom Drehkörper umgelenkten Lichtstrahls liegt. Der Fotosensor kann dabei vorzugsweise durch eine Fotodiode, aber auch durch einen Fotowiderstand, Fototransistor oder eine Fotozelle gebildet sein.

Die vorliegende Erfindung betrifft auch ein der vorangehend beschriebenen Vorrichtung entsprechendes Verfahren zur Anzeige von Informationen durch Licht auf verschiedenen Bereichen einer Anzeigefläche. Das erfindungsgemäße Verfahren besteht darin, dass ein Drehkörper zur Umlenkung eines Lichtstrahls insbesondere mit einer Geschwindigkeit von über 1000, vorzugsweise von über 3000 Umdrehungen pro Minute kontinuierlich rotierend angetrieben wird, und dass eine mindestens eine LED umfassende Lichtquelle intermittierend derart angesteuert wird, dass ein erzeugter Lichtstrahl genau dann auf den Drehkörper gerichtet wird, wenn der vom Drehkörper umgelenkte bzw. reflektierte Lichtstrahl den gewünschten Bereich der Anzeigefläche trifft.

Durch das erfindungsgemäße Anzeigeverfahren können mit nur einer einzigen Lichtquelle gleichzeitige mehrere Markierungen auf einer Anzeigefläche in veränderbarer Form und Größe dargestellt werden, was insbesondere bei Anzeigen von Kombünstrumenten für Kraftfahrzeuge vielfältige Einsatzmöglichkeiten eröffnet.

Besonders vorteilhaft ist es bei diesem Verfahren, wenn mindestens zwei verschiedenfarbige LEDs zur Erzeugung verschiedenfarbiger Anzeigesignale angesteuert werden, wobei zur Ablaufsteuerung ein Fotosensor abwechselnd bzw. zyklisch von allen LEDs bestrahlt wird, um über eine Ablaufsteuerung die LEDs mit dem Drehkörper zu synchronisieren und/oder um Unterschiede in der Helligkeit der LEDs zu kompensieren, so dass durch die relative Messung der Helligkeiten der LEDs bei Mischfarben Abweichungen in der Farbdarstellung auf einfache Weise ausgeglichen werden können.

### Zeichnungen

In den Zeichnungen sind Ausführungsbeispiele der Erfindung dargestellt, die in der nachfolgenden Beschreibung näher erläutert werden. Es zeigen:
- Figur 1:: eine schematische Darstellung einer ersten Ausführungsvariante der erfindungsgemäßen Anzeigevorrichtung im Querschnitt;
- Figur 2a:: eine schematische Teildarstellung einer zweiten Ausführungsvariante der erfindungsgemäßen Anzeigevorrichtung im Querschnitt;
- Figur 2b:: Draufsicht auf eine Teil der Anzeigevorrichtung aus Figur 2a;
- Figur 3:: eine schematische Teildarstellung einer dritten Ausführungsvariante der erfindungsgemäßen Anzeigevorrichtung im Querschnitt;
- Figur 4:: eine schematische Darstellung von Lichtstrahlen mit unterschiedlichen optischen Wegen;
- Figur 5:: eine schematische Darstellung einer vierten Ausführungsvariante der erfindungsgemäßen Anzeigevorrichtung im Querschnitt;
- Figur 6:: dreidimensionale Darstellung einer Anzeigevorrichtung gemäß Figur 5;
- Figur 7a-7c:: drei Darstellungen verschiedener Markierungen an einem Tachometer; und
- Figur 8:: Darstellung eines Blockschaltbildes einer erfindungsgemäßen Anzeigevorrichtung.

### Beschreibung der Ausführungsbeispiele

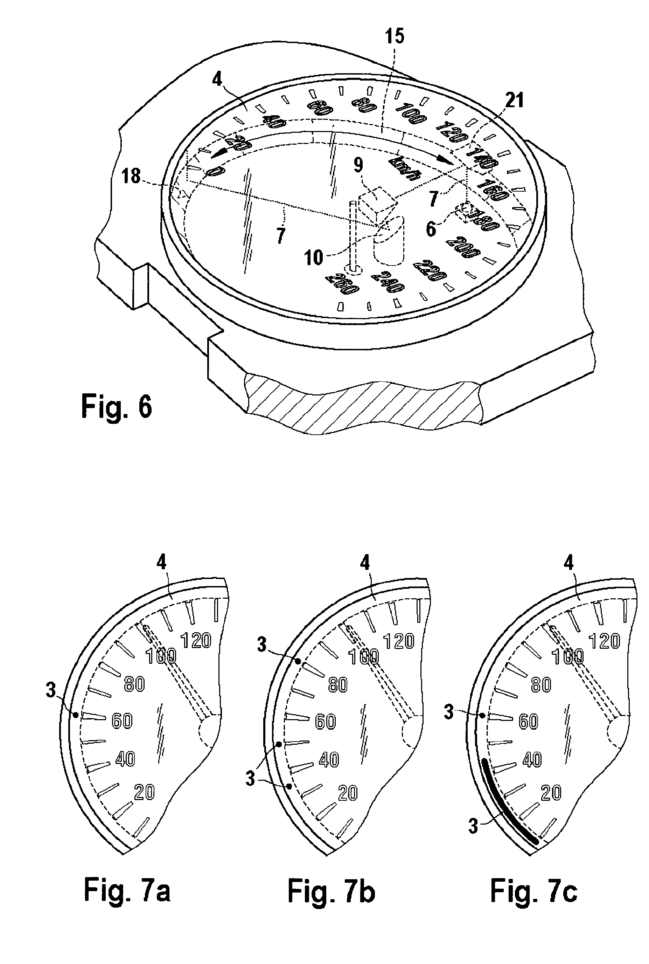

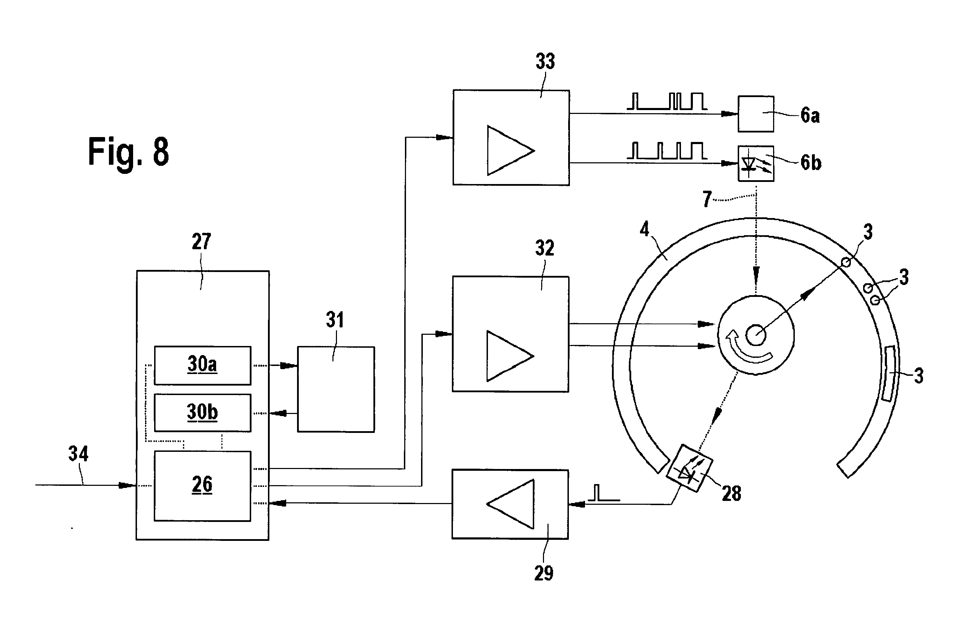

Die in den Figuren dargestellte Anzeigevorrichtung 1 wird in Kombination mit einem analogen Tachometer für ein Kraftfahrzeug eingesetzt und befindet sich mit diesem in einem gemeinsamen Gehäuse 2. Sie dient zur Projektion von variablen Lichtmarkierungen 3 (Figuren 7 und 8) auf eine kreisabschnittsförmige Anzeigefläche 4 am äußeren Rand des Zifferblatts 5 des Tachometers.

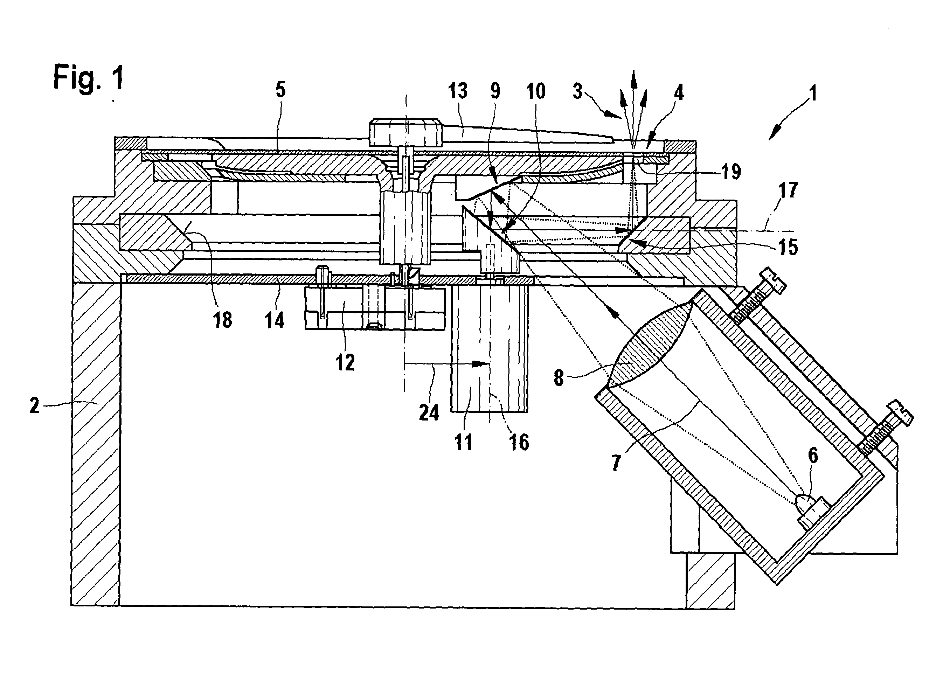

Die in Figur 1 gezeigte Ausführungsform hat eine Halbleiterlichtquelle in Form einer LED 6, die hier mit einer einfachen Kollimatoroptik in der sogenannten "Lens-Top"-Bauform eingesetzt ist. Dabei werden die von der LED 6 ausgehenden Lichtstrahlen 7 über ein durch eine vorzugsweise bikonvexe Linse 8 gebildetes optisches System zur mittelbaren Fokussierung der Lichtstrahlen 7 auf die Anzeigefläche 4 zunächst auf einen starren Umlenkspiegel 9 gelenkt, der als feststehendes Umlenkmittel dient. Dieser Spiegel 9 reflektiert die Lichtstrahlen 7 in axialer Richtung auf einen sowohl im Strahlengang als auch in der Blickrichtung eines Betrachters dahinter gelagerten Drehspiegel 10, der als bewegliches Umlenkmittel von einem Elektromotor 11 mit einer Geschwindigkeit von 5000 U/min zumindest während der Darstellung der gewünschten Lichtmarkierungen 3 kontinuierlich rotierend angetrieben wird. Wenn keine Markierungen 3 anzuzeigen sind kann der Drehspiegel selbstverständlich auch angehalten werden. Der Elektromotor 11 zum Antrieb des Drehspiegels 10 wird dabei unabhängig von der Antriebseinheit 12 des mechanischen Zeigers 13 des Tachometers gesteuert. Der Motor 11 und die Antriebseinheit 12 werden von einer Platine 14 getragen, die in dem Gehäuse 2 des Tachometers vorgesehen ist.

Von dem Drehspiegel 10 werden die Lichtstrahlen 7 in einer seiner rotatorischen Position entsprechenden Richtung nach außen auf den in dieser Richtung liegenden Bereich eines ringförmigen Kurvenspiegels 15 reflektiert, der als weiteres ortsfestes Umlenkmittel hinter der Anzeigefläche 4 angeordnet ist. Der Kurvenspiegel 15 erstreckt sich in einer senkrecht zur Rotationsachse 16 des Drehspiegels 10 orientierten Umlenkebene 17 entlang einer Kurve, die der zugehörigen Anzeigefläche 4 entspricht. Dabei reicht es aus, wenn die reflektierende Spiegelfläche 18 des Kurvenspiegels 15 sich über einen der Anzeigefläche 4 entsprechenden Sektor erstreckt, auch wenn der Körper des Kurvenspiegels 15 hier kreisförmig geschlossen ausgeführt ist und den Drehspiegel 10 vollständig umgibt. Die Spiegelfläche 18 ist kegelstumpfförmig ausgebildet und lenkt die Lichtstrahlen 7 in einer zumindest im wesentlichen parallel zur Achse 16 des Drehspiegels 10 verlaufenden Richtung auf die Rückseite der Anzeigefläche 4 um. Die Anzeigefläche 4 ist hier durch einen vor einem Spalt 19 liegenden durchleuchtbaren Bereich des Zifferblatts 5 gebildet.

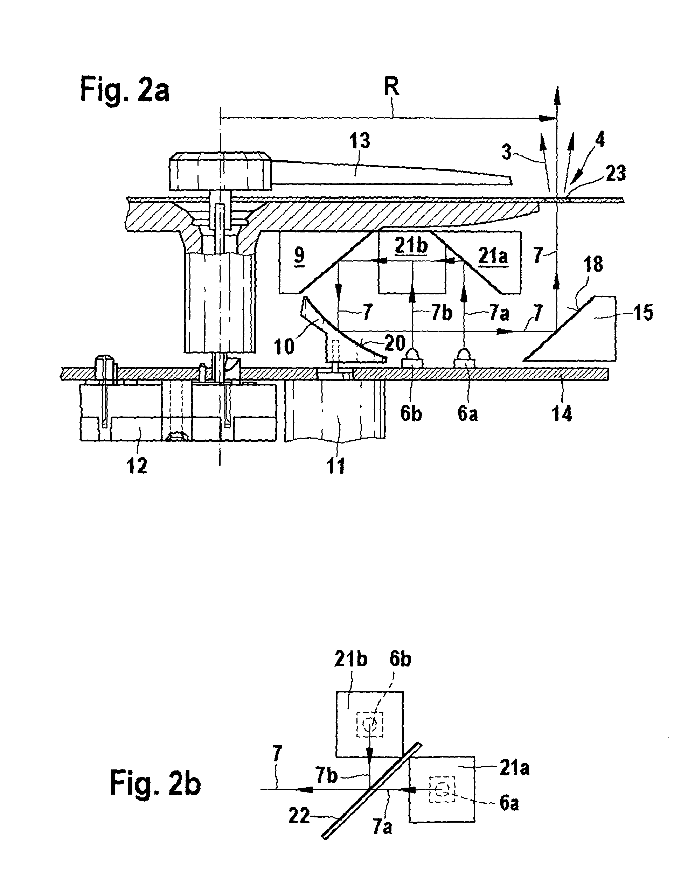

Von dieser Anzeigevorrichtung 1 unterschiedet sich die in Figur 2 gezeigte Ausführungsform im wesentlichen dadurch, dass hier das optische System zur Fokussierung der Lichtstrahlen 7 auf die Anzeigefläche 4 in den Drehspiegel 10 und in den Kurvenspiegel 15 integriert sind, so dass sich eine wesentlich kompaktere Bauform ergibt. Dazu ist der Drehspiegel 10 als optischer Hohlspiegel mit einer konkav gewölbten Spiegelfläche 20 ausgeführt. Auch die Spiegelfläche 18 des Kurvenspiegels 15 kann gewölbt sein, wobei diese Wölbung vorzugsweise asphärisch ausgebildet ist. Der Krümmungsradius der Spiegelfläche 18 beträgt dabei in der die Rotationsachse 16 des Drehspiegels 10 enthaltenden Zeichnungsebene etwa das 1,4-Fache vom Krümmungsradius R in der senkrecht zur Rotationsachse 16 des Drehspiegels 10 liegenden Umlenkebene 17.

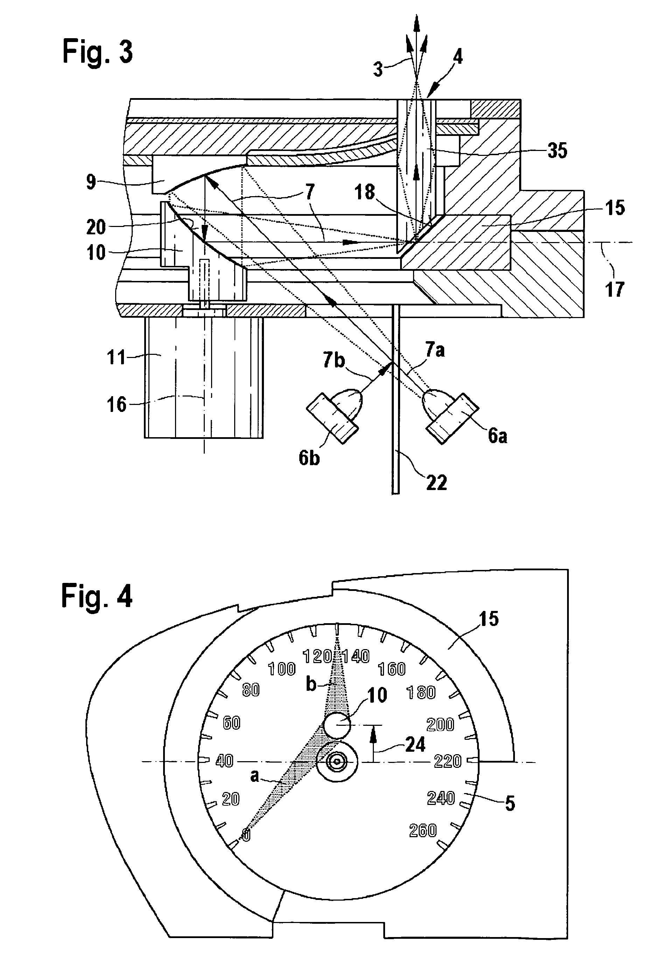

Außerdem sind in Figur 2 ebenso wie auch in Figur 3 zwei LEDs 6a und 6b mit unterschiedlichen Farben eingesetzt, so dass die anzuzeigenden Lichtmarkierungen 3 sowohl in den beiden Farben der LEDs 6a, 6b als auch bei entsprechender Helligkeitsansteuerung der LEDs 6a und 6b in beliebigen Mischtönen mehrfarbig darstellbar sind. Die von den auf der Platine 14 sitzenden LEDs 6a und 6b in Richtung zur Anzeigefläche 4 ausgehenden Lichtstrahlen 7a und 7b werden dabei zunächst jeweils durch einen ortsfesten Umlenkspiegel 21a und 21b auf den in Figur 2b in einer Draufsicht dargestellten dichroitischen Spiegel 22 umgelenkt. An dem dichroitischen Spiegel 22 werden die beiden Lichtstrahlen 7a und 7b einander überlagert und als gemeinsamer Lichtstrahl 7 in einer Mischfarbe weitergeleitet. Der dichroitische Spiegel 22 lässt dabei die von der LED 6a mit einer Wellenlänge von 540 nm ausgehenden Lichtstrahlen 7a geradlinig durch, während er die von der LED 6b mit einer Wellenlänge von 628 nm ausgehenden Lichtstrahlen 7b um 90° auf die Richtung der Lichtstrahlen 7a reflektiert. Die überlagerte Lichtstrahlen 7 werden dann wie zu Figur 1 beschrieben nacheinander über den feststehenden Umlenkspiegel 9, den rotierenden Drehspiegel 10 und den Kurvenspiegel 15 auf die Anzeigefläche 4 gelenkt, welche hier durch eine schwach streuende Streuscheibe 23 gebildet ist, auf die das Zifferblatt 5 für den Zeiger 13 aufgebracht ist.

Auch bei der in Figur 3 dargestellten Variante werden die Lichtstrahlen 7a und 7b von zwei verschiedenfarbigen LEDs 6a und 6b an einem dichroitischen Spiegel 22 einander überlagert, der ebenso wie die beiden LEDs 6a, 6b unterhalb der Platine 14 angeordnet ist. Die optischen Systeme zur Fokussierung der Lichtstrahlen 7 auf die Anzeigefläche 4 sind hier in den Umlenkspiegel 9 und in den Drehspiegel 10 integriert, die beide als Hohlspiegel ausgeführt sind.

Bei den in den Figuren 1 bis 3 gezeigten Ausführungsvarianten der Anzeigevorrichtungen 1 ist der Drehspiegel 10 jeweils neben dem mechanischen Zeiger 13 und somit exzentrisch zur Anzeigefläche 4 gelagert, welche wiederum konzentrisch zum Zifferblatt 5 des analogen Tachometers angeordnet ist. Daraus ergeben sich die in Figur 4 dargestellten Unterschiede in den optischen Wegen a und b der Lichtstrahlen. In Figur 4 ist der Drehspiegel 10 in einer nach oben gerichteten Versatzrichtung 24 aus dem Zentrum verschoben. In dieser Versatzrichtung 24 ist daher die radiale Entfernung b vom Drehspiegel 10 bis zum Kurvenspiegel 15 minimal. In den übrigen Richtungen ist diese Entfernung, wie beispielsweise bei a gezeigt, erheblich größer, woraus sich Probleme bei der Fokussierung der Lichtstrahlen 7 auf die Anzeigefläche 4 ergeben können.

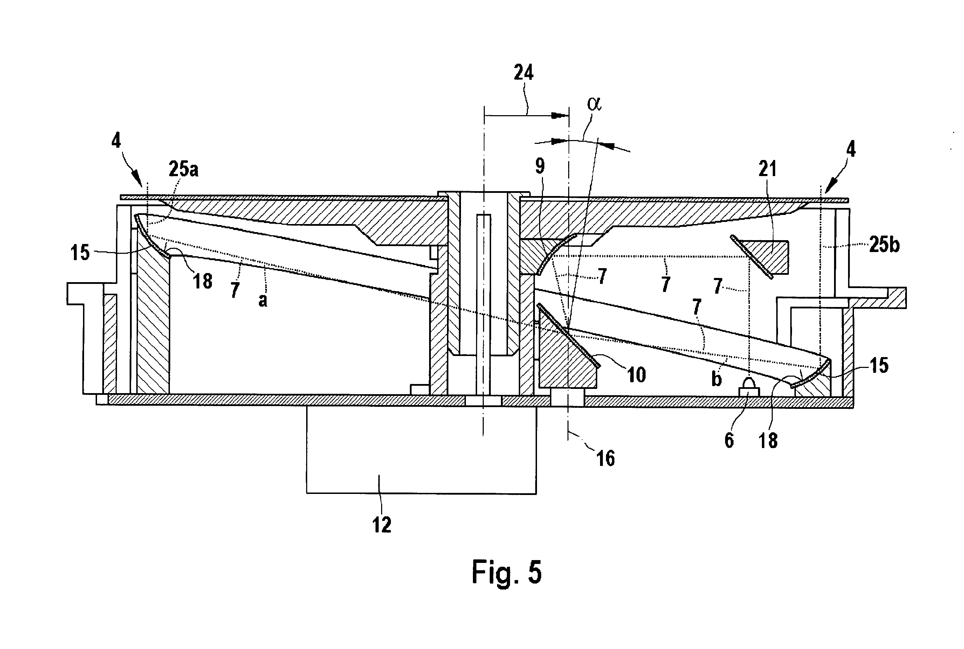

Zur Kompensierung dieser unterschiedlichen optischen Wege a und b und somit zur Verbesserung der Fokussierung kann der Kurvenspiegel 15 um einen Winkel α geneigt angeordnet werden, wie in den Figuren 5 und 6 dargestellt ist. Dabei ist die Neigung so gewδhlt, dass die axiale Entfernung zwischen dem Kurvenspiegel 15 und der Anzeigefläche 4 an der in der Versatzrichtung 24 liegenden Umfangsstelle des Kurvenspiegels 15 maximal (25b) und an der diametral gegenüberliegenden Stelle minimal (25a) ist.

In den Figuren 7a, 7b und 7c sind drei Beispiele unterschiedlicher Lichtmarkierungen dargestellt. Figur 7a zeigt eine einzelne punktförmige Markierung neben dem der Ziffer 60 zugeordneten Teilstrich. Hierdurch kann beispielsweise eine Sollgeschwindigkeit angezeigt werden. In Figur 7b sind gleichzeitig drei Markierungen angezeigt, die in etwa den Werten 35, 50 und 80 des Zifferblatts entsprechen. Hierdurch können beispielsweise Marken für einen Stufen-Tempomat angezeigt werden. In Figur 7c wird neben einer punktförmigen Markierung neben dem der Ziffer 60 zugeordneten Teilstrich gleichzeitig auch eine bogenförmige Bandmarkierung angezeigt die sich in etwa von dem Wert 10 bis zum Wert 45 des Zifferblatts erstreckt. Auf diese Weise können beispielsweise für einen Setz-Tempomat bestimmte Bereiche angezeigt werden. Durch Veränderungen der Farben und/oder der Helligkeiten sowie durch blinkende und/oder sich über den Umfang bewegende Lichtmarkierungen ergeben sich zahlreiche Variationsmöglichkeiten für die Anzeige der Markierungen.

Die erfindungsgemäße Anzeigevorrichtung 1 arbeitet gemäß der Darstellung in Figur 8 wie folgt: Der Drehspiegel 10 rotiert mit einer sehr hohen Geschwindigkeit von beispielsweise 5000 U/min. Die LED 6 bzw. die LEDs 6a und 6b der Lichtquellen werden intermittierend mit einer sehr hohen Taktung derart angesteuert, dass die erzeugten Lichtstrahlen 7 genau dann auf den Drehspiegel 10 treffen, wenn sie in die gewünschte Richtung reflektiert bzw. umgelenkt werden. Die hierzu erforderliche Synchronisation kann vorzugsweise von der Ablaufsteuerung 26 eines Slave Controllers 27 vorgenommen werden. Dazu kann eine Fotodiode 28 so angeordnet werden, dass sie im Strahlengang eines vom Drehspiegel 10 oder eines von einem drehfest hiermit angeordneten weiteren Drehspiegel umgelenkten Lichtstrahls 7 liegt und bei Erfassen eines Lichtstrahls 7 über einen Treiber 29 ein entsprechendes Signal an die Ablaufsteuerung 26 übermittelt, so dass die momentane Stellung des Drehspiegels bekannt ist. Die Ablaufsteuerung ist vorteilhafterweise über zwei Timer 30a und 30b mit einem Phasenregelkreis (PLL) 31 zur Synchronisation des Motortreibers 32 mit dem LED-Treiber 33 verbunden, die ebenfalls mit der Ablaufsteuerung 26 verbunden sind. Der Motortreiber 32 ist an den EC-Motor 11 angeschlossen und der LED-Treiber ist an die beiden LEDs 6a und 6b angeschlossen. Über eine Schnittstelle 34 werden der Ablaufsteuerung 26 externe Informationen über die anzuzeigenden Lichtmarkierungen 3 zugeführt.

Durch Herstellungstolleranzen und andere Einflüsse kann es zu Unterschieden der LED-Helligkeiten und damit bei Mischfarben zu Abweichungen in der Farbdarstellung kommen. Diese lassen sich hierbei auf einfache Weise dadurch kompensieren, dass die für die Synchronisation eingesetzte Fotodiode 28 oder ein weiterer Fotosensor abwechselnd mit unterschiedlichen Farben bestrahlt und für eine relative Messung der Helligkeit verwendet wird.

Obwohl die vorliegende Erfindung hier lediglich anhand bevorzugter Ausführungsbeispiele beschrieben wurde, ist sie nicht darauf beschränkt, sondern in vielfältiger Weise modifizierbar. Insbesondere sind die Form der Skalen und die Aufteilung des Zifferblattes nicht auf die gezeigten Beispiele beschränkt, sondern sie können beliebig gestaltet werden. Auch ist die Anbindung der erfindungsgemäßen Anzeigevorrichtung 1 an ein analoges Zeiger-Anzeigegerät nicht unbedingt erforderlich.

Auch können beispielsweise Reflexionsprismen bzw. Umlenkprismen an der Stelle von Spiegeln zur Umlenkung der Lichtstrahlen eingesetzt werden.

## Patentansprüche

1. Anzeigevorrichtung, insbesondere für Kombünstrumente von Kraftfahrzeugen, mit einer mindestens eine LED (6, 6a, 6b) umfassenden Lichtquelle zur Erzeugung eines Lichtstrahls (7, 7a, 7b), der über bewegliche Umlenkmittel (10) wahlweise auf verschiedene Bereiche einer Anzeigefläche (4) lenkbar ist, wobei die beweglichen Umlenkmittel einen kontinuierlich rotierenden Drehkörper (10), insbesondere einen Drehspiegel umfassen, wobei ein optisches System (8, 18, 20) zur Fokussierung des Lichtstrahls (7) auf die Anzeigefläche (4) vorgesehen ist und wobei Steuerungsmittel (26) vorgesehen sind, durch die die LED (6, 6a, 6b) intermittierend ansteuerbar ist, **dadurch gekennzeichnet, dass** die Anzeigefläche (4) ein transmissives Medium, insbesondere eine Streuscheibe (23) umfasst und dass hinter der Anzeigefläche (4) als feststehendes Umlenkmittel ein in einer zur Rotationsachse (16) des Drehkörpers (10) senkrechten Ebene (17) liegender, vorzugsweise bogenförmig oder kreisförmig ausgebildeter, Kurvenspiegel (15) derart angeordnet ist, dass von dem Drehkörper (10) reflektierte Lichtstrahlen (7) auf die Rückseite der Anzeigefläche (4) umlenkbar sind.

2. Anzeigevorrichtung nach Anspruch 1, **dadurch gekennzeichnet, dass** die optischen Systeme (18, 20) zur Fokussierung des Lichtstrahls (7) auf die Anzeigefläche (4) in bewegliche und/oder feststehende Umlenkmittel (9, 10, 15) integriert sind.

3. Anzeigevorrichtung nach Anspruch 2, **dadurch gekennzeichnet, dass** mindestens eine Umlenkfläche (18, 20) der beweglichen und/oder der feststehenden Umlenkmittel (9, 10, 15) asphärisch gewölbt ist, wobei der Krümmungsradius der Umlenkfläche in einer die Rotationsachse (16) des Drehkörpers (10) enthaltenden Ebene größer ist als der Krümmungsradius (R) in einer senkrecht zur Rotationsachse (16) des Drehkörpers (10) liegenden Ebene.

4. Anzeigevorrichtung nach einem der vorhergehenden Ansprüche, **dadurch gekennzeichnet, dass** der Kurvenspiegel (15) einen kreisförmigen oder kreisabschnittsförmigen Verlauf hat, wobei der kontinuierlich rotierende Drehkörper (10) exzentrisch zum Kurvenspiegel (15) angeordnet ist, und dass der Kurvenspiegel (15) zur Ebene der Anzeigefläche (4) um einen Winkel (α) geneigt ist.

5. Anzeigevorrichtung nach einem der vorhergehenden Ansprüche, **dadurch gekennzeichnet, dass** der Kurvenspiegel (15) über seinen Verlauf variierende Wölbungen in einer die Rotationsachse (16) des Drehkörpers (10) enthaltenden Ebene aufweist.

6. Anzeigevorrichtung nach einem der vorherigen Ansprüche, **dadurch gekennzeichnet, dass** die Lichtquelle zwei verschiedenfarbige LEDs (6a, 6b) sowie einen dichroitischen Spiegel (22) umfasst, durch welchen die Lichtstrahlen (7a, 7b) der zwei LEDs (6a, 6b) einander überlagerbar sind.

7. Anzeigevorrichtung nach Anspruch 6, **dadurch gekennzeichnet, dass** die Lichtquelle drei verschiedenfarbige LEDs sowie zwei dichroitische Spiegel oder einen X-Cube umfasst, durch welche(n) die Lichtstrahlen der drei LEDs einander überlagerbar sind.

8. Anzeigevorrichtung nach einem der vorherigen Ansprüche, **dadurch gekennzeichnet, dass** zur Synchronisation der Lichtquelle (6, 6a, 6b) mit dem Drehkörper (10) ein mit einer Vorrichtungssteuerung (26) verbundener Fotosensor (28) derart angeordnet ist, dass er im Strahlengang eines vom Drehkörper (10) umgelenkten Lichtstrahls (7) liegt.

9. Verfahren zur Anzeige von Informationen durch Licht auf verschiedenen Bereichen einer Anzeigefläche (4), vorzugsweise auf einer Anzeigefläche eines Kombiinstrumentes für Kraftfahrzeuge, insbesondere mit einer Anzeigevorrichtung (1) nach einem der vorherigen Ansprüche, mit den folgenden Verfahrensschritten:
- ein Drehkörper (10) zur Umlenkung eines Lichtstrahls (7) wird kontinuierlich rotierend angetrieben,
- eine mindestens eine LED (6, 6a, 6b) umfassende Lichtquelle wird intermittierend derart angesteuert, dass ein erzeugter Lichtstrahl (7, 7a, 7b) genau dann auf den Drehkörper (10) gerichtet wird, wenn der vom Drehkörper (10) umgelenkte Lichtstrahl (7) mittelbar oder unmittelbar den gewünschten Bereich der Anzeigefläche (4) trifft,
- von dem Drehkörper (10) reflektierte Lichtstrahlen (7) werden auf die Rückseite der Anzeigefläche (4) umgelenkt,
wobei die Umlenkung über einen Kurvenspiegel (15) als feststehendes Umlenkmittel erfolgt,
wobei der Kurvenspiegel in einer zur Rotationsachse (16) des Drehkörpers (10) senkrechten Ebene (17) liegt und vorzugsweise bogenförmig oder kreisförmig ausgebildet ist
und wobei der Kurvenspiegel hinter der ein transmissives Medium, insbesondere eine Streuscheibe, umfassenden Anzeigefläche (4) angeordnet ist.

10. Verfahren nach Anspruch 9, **dadurch gekennzeichnet, dass** mindestens zwei verschiedenfarbige LEDs (6a, 6b) zur Erzeugung verschiedenfarbiger Lichtmarkierungen (3) angesteuert werden, wobei zur Ablaufsteuerung ein Fotosensor (28) abwechselnd bzw. zyklisch von allen LEDs (6a, 6b) bestrahlt wird, um die LEDs (6a, 6b) mit dem Drehkörper (10) zu synchronisieren und/oder um Unterschiede in der Helligkeit der LEDs (6a, 6b) zu kompensieren.

## Claims

1. Display apparatus, in particular for instrument clusters of motor vehicles, having a light source comprising at least one LED (6, 6a, 6b) for generating a light beam (7, 7a, 7b) which can selectively be steered onto different zones of a display area (4) via moveable deflecting means (10), the moveable deflecting means comprising a continuously rotating rotary element (10), in particular a rotating mirror, an optical system (8, 18, 20) being provided for focusing the light beam (7) onto the display area (4), and control means (26) being provided by means of which the LED (6, 6a, 6b) can be driven intermittently, **characterized in that** the display area (4) comprises a transmissive medium, in particular a diffuser (23), and **in that** a curved mirror (15) which is preferably of arched or circular design and lies in a plane (17) perpendicular to the axis of rotation (16) of the rotary element (10) is arranged behind the display area (4) as a static deflecting means, in such a way that light beams (7) reflected by the rotary element (10) can be deflected onto the rear side of the display area (4).

2. Display apparatus according to Claim 1, **characterized in that** the optical systems (18, 20) for focusing the light beam (7) onto the display area (4) are integrated in moveable and/or static deflecting means (9, 10, 15).

3. Display apparatus according to Claim 2, **characterized in that** at least one deflecting area (18, 20) of the moveable and/or static deflecting means (9, 10, 15) is aspherically arched, the radius of curvature of the deflecting area being greater in a plane containing the axis of rotation (16) of the rotary element (10) than the radius of curvature (R) in a plane lying perpendicular to the axis of rotation (16) of the rotary element (10).

4. Display apparatus according to one of the preceding claims, **characterized in that** the curved mirror (15) has a profile which is of the form of a circle or segment of a circle, the continuously rotating rotary element (10) being arranged off centre to the curved mirror (15), and **in that** the curved mirror (15) is inclined at an angle (α) to the plane of the display area (4).

5. Display apparatus according to one of the preceding claims, **characterized in that** along its profile the curved mirror (15) has varying curvatures in a plane containing the axis of rotation (16) of the rotary element (10).

6. Display apparatus according to one of the preceding claims, **characterized in that** the light source comprises two LEDs (6a, 6b) of differing colour and a dichroic mirror (22), by means of which the light beams (7a, 7b) of the two LEDs (6a, 6b) can be superposed on one another.

7. Display apparatus according to Claim 6, **characterized in that** the light source comprises three LEDs of differing colour and two dichroic mirrors or an x-cube, by means of which the light beams of the three LEDs can be superposed on one another.

8. Display apparatus according to one of the preceding claims, **characterized in that** a photosensor (28) connected to an apparatus control (26) is arranged to synchronize the light source (6, 6a, 6b) with the rotary element (10) in such a way that the photosensor (28) lies in the beam path of a light beam (7) deflected by the rotary element (10).

9. Method for displaying items of information by light on different zones of a display area (4), preferably on a display area of an instrument cluster for motor vehicles, in particular with a display apparatus (1) according to one of the previous claims, having the following method steps:
- a rotary element (10) for deflecting a light beam (7) is continuously rotationally driven,
- a light source comprising at least one LED (6, 6a, 6b) is driven intermittently in such a way that a generated light beam (7, 7a, 7b) is directed onto the rotary element (10), precisely when the light beam (7) deflected by the rotary element (10) is indirectly or directly incident on the desired zone of the display area (4),
- light beams (7) reflected by the rotary element (10) are deflected onto the rear side of the display area,
the deflection being effected via a curved mirror (15) as a static deflecting means,
the curved mirror lying in a plane (17) perpendicular to the axis of rotation (16) of the rotary element (10) and preferably being of arched or circular design,
and the curved mirror being arranged behind the display area (4) comprising a transmissive medium, in particular a diffuser.

10. Method according to Claim 9, **characterized in that** at least two LEDs (6a, 6b) of differing colours are driven to generate light markings (3) of differing colours, a photosensor being irradiated alternately or cyclically by all LEDs (6a, 6b) for the purpose of controlling the sequence in order to synchronize the LEDs (6a, 6b) with the rotary element (10) and/or to compensate differences in the luminosity of the LEDs (6a, 6b).

## Revendications

1. Dispositif d'affichage, notamment pour des instruments d'affichage combinés de véhicules automobiles, comportant au moins une source lumineuse avec au moins une diode LED (6, 6a, 6b) générant un faisceau lumineux (7, 7a, 7b) dirigé par des moyens de renvoi (10), mobiles, sélectivement vers différentes zones d'une surface d'affichage (4),
les moyens de renvoi mobiles comprenant un organe de rotation (10) tournant en continu, notamment un miroir tournant,
un système optique (8, 18, 20) focalisant le faisceau lumineux (7) sur la surface d'affichage (4) et
des moyens de commande (26) commandant de manière intermittente les diodes LED (6, 6a, 6b),
**caractérisé en ce que**
la surface d'affichage (4) comprend un moyen de transmission, notamment un disque diffuseur (23) et
derrière la surface d'affichage (4) il est prévu comme moyen de renvoi fixe, un miroir courbe (15), de préférence de forme courbe ou de forme circulaire, situé dans un plan (17) perpendiculaire à l'axe de rotation (16) de l'organe rotatif (10), de façon que le faisceau lumineux (7) réfléchi par l'organe rotatif (10) soit dévié vers la face arrière de la surface d'affichage (4).

2. Dispositif d'affichage selon la revendication 1,
**caractérisé en ce que**
les systèmes optiques (18, 20) pour focaliser le faisceau lumineux (7) sur la surface d'affichage (4) sont intégrés dans des moyens de renvoi (9, 10, 15) mobiles et/ou fixes.

3. Dispositif d'affichage selon la revendication 2,
**caractérisé en ce qu'**
au moins une surface de renvoi (18, 20) des moyens de renvoi mobiles et/ou fixes (9, 10, 15) est courbée de manière asphérique, le rayon de courbure de la surface de renvoi, dans un plan passant par l'axe de rotation (16) de l'organe rotatif (10) étant plus grand que le rayon de courbure (R) dans un plan perpendiculaire à l'axe de rotation (16) de l'organe rotatif (10).

4. Dispositif d'affichage selon l'une des revendications précédentes,
**caractérisé en ce que**
le miroir courbe (15) a un tracé de forme circulaire ou d'arc de cercle et l'organe rotatif (10) tournant en continu est excentré par rapport au miroir courbe (15) et
le miroir courbe (15) est incliné d'un angle (α) par rapport au plan de la surface d'affichage (4).

5. Dispositif d'affichage selon l'une des revendications précédentes,
**caractérisé en ce que**
le miroir courbe (15) a une courbure variable dans un plan passant par l'axe de rotation (16) de l'organe rotatif (10) .

6. Dispositif d'affichage selon l'une des revendications précédentes,
**caractérisé en ce que**
la source lumineuse comprend deux diodes LED (6a, 6b) de couleurs différentes ainsi qu'un miroir dichroïque (22), qui superposent les faisceaux lumineux (7a, 7b) des deux diodes LED (6a, 6b).

7. Dispositif d'affichage selon la revendication 6,
**caractérisé en ce que**
la source lumineuse comprend trois diodes LED de couleurs différentes ainsi que deux miroirs dichroïques ou un cube X qui superpose les faisceaux lumineux des trois diodes LED.

8. Dispositif d'affichage selon l'une des revendications précédentes,
**caractérisé par**
un photo-capteur (28) relié à une commande de dispositif (26) pour synchroniser la source lumineuse (6, 6a, 6b) sur l'organe rotatif (10), de façon que le photo-capteur se situe dans le trajet d'un faisceau lumineux (7) dévié par l'organe rotatif (10).

9. Dispositif d'affichage d'informations par de la lumière sur différentes zones d'une surface d'affichage (4), de préférence une surface d'affichage d'un instrument combiné de véhicule automobile, notamment avec un dispositif d'affichage (1) selon l'une des revendications précédentes, comprenant les étapes de procédé suivantes :
- on entraîne en rotation continue un organe rotatif (10) pour dévier un faisceau lumineux (7),
- on commande de façon intermittente une source lumineuse comprenant au moins une diode LED (6, 6a, 6b) de façon à diriger un faisceau lumineux (7, 7a, 7b), généré, précisément sur l'organe rotatif (10) lorsque le faisceau lumineux (7) dévié par l'organe rotatif (10) arrive directement ou indirectement sur la zone souhaitée de la surface d'affichage (4),
- les faisceaux lumineux (7) réfléchis par l'organe rotatif (10) sont déviés vers le côté arrière de la surface d'affichage (4),
la déviation se fait par l'intermédiaire d'un miroir courbe (15) comme moyen de déviation fixe,
le miroir courbe est situé dans un plan (17) perpendiculaire à l'axe de rotation (16) de l'organe rotatif (10) et il a de préférence une forme courbe ou une forme circulaire et
le miroir courbe est installé derrière la surface d'affichage (4) comprenant un moyen de transmission, notamment un disque diffuseur.

10. Procédé selon la revendication 9,
**caractérisé par**
au moins deux diodes LED de couleurs différentes (6a, 6b) pour générer des repères lumineux (3) différents, et pour commander le fonctionnement, un photo-capteur (8), est éclairé alternativement ou de manière cyclique par toutes les diodes LED (6a, 6b) pour synchroniser les diodes LED (6a, 6b) sur l'organe rotatif (10) et/ou compenser les différentes de luminosité des diodes LED (6a, 6b).
